## Europäisches Patentamt
## European Patent Office
## Office européen des brevets

(19)

(11) Numéro de publication: **0 062 132 B1**

(12)
# FASCICULE DE BREVET EUROPEEN

(45) Date de publication du fascicule du brevet:
**16.01.85**

(51) Int. Cl.⁴: **A 01 G 27/00**

(21) Numéro de dépôt: **81430009.1**

(22) Date de dépôt: **28.04.81**

(54) Dispositif automatique pour le réglage hygrométrique dans les bacs de culture.

(30) Priorité: **03.04.81 FR 8106906**

(43) Date de publication de la demande:
**13.10.82 Bulletin 82/41**

(45) Mention de la délivrance du brevet:
**16.01.85 Bulletin 85/3**

(84) Etats contractants désignés:
**BE CH DE GB IT LI NL**

(56) Documents cités:
**FR - A - 2 044 004**
**FR - A - 2 393 528**

(73) Titulaire: **Manufacture Provençale de Matières Plastiques SA, 7 Traverse du Portugal, F-13010 Marseille (FR)**

(72) Inventeur: **Marmonier, Gaston, 376 Boulevard Michelet, F-13009 Marseille (FR)**

(74) Mandataire: **Roman, Alphonse, 35 Rue Paradis, F-13001 Marseille (FR)**

ACTORUM AG

# Description

L'objet de l'invention concerne un dispositif automatique pour le réglage hygrométrique dans les bacs de culture.

Il est destiné à permettre la répartition du fluide d'arrosage en fonction de la dessiccation de la masse terreuse supportée par la grille absorbante de pompage et de répartition située au-dessus du réservoir.

Dans les dispositifs connus, on rencontrait de multiples inconvénients perturbant le fonctionnement des organes. C'est ainsi que les membranes pilotes étaient influencées par la tension de vapeur d'eau contenue à l'intérieur du pot, les mécanismes mal protégés et complexes se coinçaient et la disposition des éléments transporteurs d'eau créait des chemins de capillarité non contrôlables ainsi que perturbateurs.

Le brevet français N° 2044004 revendique un levier basculant sous l'action directe d'une membrane; le brevet français N° 2393528, par contre, utilise une membrane extensible et rétractile combinée avec un ensemble de transmission extrêmement complexe. Ces ensembles ne permettaient pas d'obtenir une humectation de la masse terreuse en fonction de sa dessiccation, car la membrane extensible n'était pas isolée et ne subissait pas uniquement les effets de la masse terreuse à détecter au moyen d'une sonde, ce qui nuisait à la transmission des impulsions détectrices.

Le dispositif suivant l'invention supprime ces imperfections par la simplification des mécanismes assurant la commande et l'interruption de l'imprégnation hygrométrique ainsi que le réglage précis de la répartition de l'eau ou du liquide humidificateur en fonction de la dessiccation de la masse terreuse au moyen d'organes intégralement protégés, mais accessibles ainsi que contrôlables de l'extérieur.

Le dispositif selon l'invention pour le réglage automatique de l'humidité dans les bacs de culture est destiné à répartir un liquide d'humidification en fonction de la dessiccation d'une masse terreuse supportée par une grille de répartition située au-dessus d'un réservoir contenant ledit liquide, ce dispositif comprenant un interrupteur de capillarité composé d'un élément conducteur de liquide par capillarité en contact avec la grille supportant la masse terreuse et d'un organe mobile rappelé par ressort et porteur d'une garniture absorbante plongeant dans le liquide du réservoir et destinée à venir en contact avec l'élément conducteur par capillarité, ce dispositif comprenant en outre des moyens de détection et de commande composés respectivement d'une sonde en matériau absorbant en contact avec la masse terreuse et d'une membrane extensible tendue entre un point d'ancrage et l'organe mobile auquel elle est fixée, ledit organe avec son ressort et la membrane étant logés dans au moins un carter de protection.

Selon l'invention:
— l'organe mobile est un levier vertical articulé à son extrémité supérieure et portant la garniture à sa partie inférieure;
— la membrane est logée dans une chambre séparée du carter de protection, et
— la sonde est munie d'une grille rigide de lestage et de maintien en forme de sa partie inférieure qui est enfouie dans la masse terreuse, tandis que sa partie supérieure pénètre dans la chambre séparée où une variation du degré hygrométrique de l'ambiance fait varier la longueur de la membrane et actionne le levier de l'interrupteur.

Sur les dessins annexés, donnés à titre d'exemple non limitatif, d'une des formes de réalisation de l'objet de l'invention:

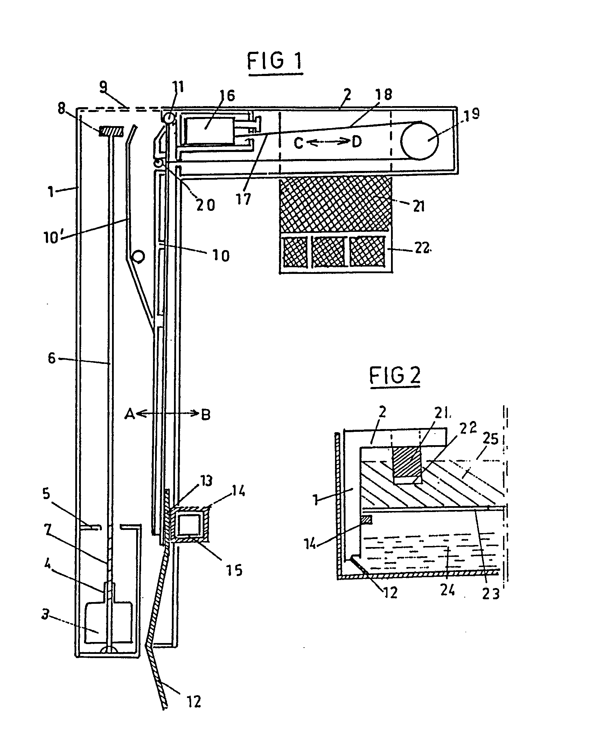

la fig. 1 représente, vu en élévation, le positionnement des organes distributeurs et détecteurs ainsi que de transmission;

la fig. 2 montre le dispositif placé dans un bac ou pot de culture.

L'appareil est constitué par la combinaison d'un carter vertical 1 contenant le dispositif d'humectation, et d'un carter horizontal ou perpendiculaire placé à la partie supérieure 2 protégeant l'ensemble détecteur.

La base du carter 1 plonge dans le réservoir du bac et comporte un flotteur 3 avec embout fileté 4 se déplaçant dans un guide 5 limitant sa course verticale. Ce flotteur se déplace le long de la tige 6 pourvue d'un secteur hélicoïdal 7 et ancrée à sa base sur crapaudine.

L'extrémité de cette tige supporte un élément circulaire 8 avec secteur coloré qui, par sa rotation, fait apparaître à travers le voyant 9 un index traditionnel indiquant le niveau d'eau.

L'humectation de la grille du bac supportant la masse terreuse s'effectue par le déplacement du levier 10 articulé à son point haut 11 et relié à une membrane extensible.

La partie inférieure du levier est porteuse d'une garniture absorbante 12 plongeant dans le réservoir 24 (fig. 2) rempli de liquide.

Le secteur supérieur 13 de la garniture absorbante contacte la substance absorbante 14 entourant le support 15 placé en contact avec le parement inférieur ou supérieur de la grille 23 (fig. 2) répartisseuse du fluide d'arrosage et supportant la masse terreuse.

Cet ensemble 13, 14 constitue un moyen d'arrêt d'hygrométrie et de capillarité ouvrant et fermant le circuit d'imprégnation de la masse terreuse 25 (fig. 2) contenue dans le bac. Un ressort de rappel 10' écarte le levier 10 de la garniture 14 servant à l'humectation de la grille de répartition.

Le carter perpendiculaire 2, implanté à la partie supérieure du carter vertical 1 qui forme monture, protège l'ensemble détecteur de dessiccation et de commande de l'interrupteur d'humectation constitué par le levier 10 et son ressort 10'. Cet ensemble comporte un élément d'ancrage réglable 16 retenant une extrémité 17 de la membrane extensible 18.

Cette membrane est positionnée par le palier circulaire 19 qui la divise en deux branches de façon que l'extrémité opposée 20 de la boucle soit reliée au levier oscillant 10.

Une sonde en matière absorbante par capillarité amène l'humidité dans la chambre 2 où sont positionnés les deux secteurs 17 et 20 de la membrane 18. L'extrémité inférieure de cette sonde est munie d'une grille rigide 22 de lestage et de maintien en forme, évitant de réduire la surface de captation 21 d'hygrométrie introduite dans la masse terreuse 25.

L'extension ou la rétraction de la membrane 18 opère une translation (flèches C, D), faisant osciller le levier 10 (flèches A, B), qui contacte le distributeur d'humidité 14, 15 ou l'en écarte, distributeur qui humecte la grille de répartition lorsque la dessiccation de la masse terreuse rétracte la membrane 18.

Le levier est écarté de l'interrupteur 14, 15 de distribution par le ressort de rappel 10' et la distension de la membrane 18.


## Revendications

1. Dispositif de réglage automatique de l'humidité dans les bacs de culture destiné à répartir un liquide d'humidification en fonction de la dessiccation d'une masse terreuse (25) supportée par une grille (23) de répartition située au-dessus d'un réservoir (24) contenant ledit liquide, ce dispositif comprenant un interrupteur de capillarité composé d'un élément conducteur de liquide par capillarité (14, 15) en contact avec la grille (23) supportant la masse terreuse et d'un organe mobile (10) rappelé par ressort et porteur d'une garniture absorbante (12) plongeant dans le liquide du réservoir (24) et destinée à venir en contact avec l'élément conducteur par capillarité (14, 15), ce dispositif comprenant en outre des moyens de détection et de commande composés respectivement d'une sonde en matériau absorbant en contact avec la masse terreuse (25) et d'une membrane extensible (18) tendue entre un point d'ancrage (16) et l'organe mobile (10) auquel elle est fixée, ledit organe (10) avec son ressort (10') et la membrane (18) étant logés dans au moins un carter de protection, caractérisé en ce que l'organe mobile (10) est un levier vertical articulé à son extrémité supérieure et portant la garniture (12) à sa partie inférieure, la membrane (18) est logée dans une chambre séparée (2) du carter de protection, et la sonde est munie d'une grille rigide (22) de lestage et de maintien en forme de sa partie inférieure qui est enfouie dans la masse terreuse (25), tandis que sa partie supérieure pénètre dans la chambre séparée (2) où une variation du degré hygrométrique de l'ambiance fait varier la longueur de la membrane et actionne le levier (10) de l'interrupteur.

2. Dispositif suivant la revendication 1, caractérisé en ce que le carter de protection comporte un flotteur (3) avec embout fileté (4) se déplaçant à l'intérieur d'un guide (5) le long d'une tige verticale (6) ancrée à sa base sur crapaudine, cette tige étant pourvue d'un secteur hélicoïdal (7) à la hauteur de la course du flotteur (3) et d'un disque signalisateur (8) implanté à sa partie haute positionnée sous un voyant (9).


## Claims

1. Automatic device for hygrometric regulation in cultivation troughs serving to permit the balanced distribution of the water or of the liquid irrigation fluid according to the desiccation of the earth mass supported by the absorbant distributing grid situated above the reservoir, characterised by the combination of the structures and functions of the various members and, more particularly, firstly by the distribution assembly protected by the housing (1) and (2) comprising an oscillating lever (10) articulated at its top (11) and couplet at its upper part to an extensible membrane (18) at the point (20) with an integral return spring (10') and carrying at its lower part an absorbent member (12) entering into contact with a capillarity-interrupting section (14, 15) transmitting the moisture to the grid (23) supporting the earth mass (25), then by the control detector assembly protected by the housing (2) and formed, on the one hand, by the membrane (17, 18) positioned by the circular bearing (19) with adjustable fixed point (16) at one of its ends (17) whilst its opposite end is connected directly at the point (20) to the oscillating lever (10), and on the other hand, by the control probe (21) protected at its central part by a rigid grid (21) and the lower end of which is provided with a surface in direct contact with the earth mass (25), whilst the upper end contacts the extensible membrane (18); finally, by the control members formed by a probe of capillary absorbing material protected at its central part by a rigid grid (21) but having a free end (22) entering into the heart of the earth mass (25) whilst its upper part entirely free at the interior of the housing (2) contacts the extensible membrane (17, 18) having its fixed point with adjustment of tension (16) and its free end coupled at the point (20) to the oscillating lever (10).

2. Device according to Claim 1, characterised by the fact that the vertical housing (1) comprises a float (3) with threaded ferrule (4) moving at the interior of a guide (5) along a vertical rod (6) anchored at its base on a socket; this rod is provided with a helicoidal section (7) over the height of the stroke of the float (3) and a signal disc (8) engaged on its upper part positioned under a viewer (9).


## Patentansprüche

1. Automatische Vorrichtung für die Feuchteregelung in Kulturgefässen zur gleichmässigen Verteilung von Wasser oder fliessfähigem Berieselungsfluid in Abhängigkeit von der Austrocknung des von dem über dem Behälter angeordneten absorbierenden Verteilungsgitter getragenen Erdkörpers, durch die bauliche und funktionsmässige Kombination verschiedener Elemente und insbesondere zunächst durch denvon den Gehäusen (1) und (2) geschützten Verteileraufbau, der einen Schwinghebel (10) aufweist, welcher um sein oberes Ende (11) schwenkbar ist und mit seinem oberen Abschnitt am Punkte (20) mit einer dehnbaren Membran (18) verbunden ist; ausserdem eine baulich mit ihm zusammenhängende Rückführfeder (10') besitzt und an seinem unteren Ende einen absorbierenden Belag (12) trägt, der mit einem Kapillaritätsunterbrechungsabschnitt (14, 15) in Berührung tritt, welcher die Befeuchtung auf das den Erdkörper (25) tragende Gitter (23) überträgt, ferner durch den Steuerdetektoraufbau, der von dem Gehäuse (2) geschützt ist und der einerseits aus der um das Rundlager (19) geführten Membran (17, 18) besteht, deren eines Ende (17) an einem einstellbaren Festpunkt (16) liegt, während das entgegengesetzte Ende der Membran am Punkte (20) unmittelbar mit dem Schwinghebel (10) verbunden ist, und andererseits aus dem Steuerfühler (21), der in seinem Mittelabschnitt durch ein starres Gitter (21) geschützt ist und dessen unteres Ende eine Fläche aufweist, die in unmittelbarer Berührung mit dem Erdkörper (25) steht, während das obere Ende die dehnbare Membran (18) berührt, schliesslich durch Steuerorgane, die aus einem Fühler von durch Kapillarität absorbierendem Material bestehen, dessen Mittelteil durch ein starres Gitter (21) geschützt ist, der aber ein freiliegendes Ende (22) aufweist, das in die Mitte des Erdkörpers (25) eindringt, während sein oberes, völlig freiliegendes Ende im Inneren des Gehäuses (2) die dehnbare Membran (17, 18) berührt, deren fester Punkt mit einer Spannungsregulierung (16) versehen ist und deren freies Ende am Punkte (20) mit dem Schwinghebel (20) verbunden ist.

2. Vorrichtung nach Anspruch 1, dadurch gekennzeichnet, dass das vertikale Gehäuse (1) einen mit einem Gewindeansatz (4) versehenen Schwimmer (3) aufweist, der im Inneren einer Führung (5) längs eines vertikalen Stabes (6) verschiebbar ist, welcher mit seinem Fuss in einem Spurlager ruht und der im Bereich der Bewegungsbahn des Schwimmers (3) mit einem schraubenlinienförmigen Abschnitt (7) versehen ist und eine Anzeigescheibe (8) aufweist, die an seinem oberen Teil unter einem Schauglas (9) angeordnet ist.

## FIG 1

## FIG 2